# EUROPÄISCHE PATENTSCHRIFT

(11) **EP 2 127 867 B1**
(45) Veröffentlichungstag und Bekanntmachung des Hinweises auf die Patenterteilung: **07.08.2013**
(21) Anmeldenummer: 09006512.9
(22) Anmeldetag: 14.05.2009
(51) Int. Cl.: B32B 37/10, B30B 5/02, B30B 7/02

(54) **Presse und Verfahren zum Laminieren von im Wesentlichen plattenförmigen Werkstücken**
Press and method for laminating board-shaped workpieces
Presse et procédé de laminage de pièces usinées en forme de plaque

(30) Priorität: 29.05.2008 DE 102008025790
(43) Veröffentlichungstag der Anmeldung: 02.12.2009
(73) Patentinhaber: Robert Bürkle GmbH, 72250 Freudenstadt (DE)
(72) Erfinder: Metzger, Dagmar, 76187 Karlsruhe (DE); Damm, Norbert, 76689 Karlsdorf-Neuthard (DE); Dölker, Gerhard, 72270 Baiersbronn (DE); Renz, Wolfgang, 72250 Freudenstadt (DE)
(74) Vertreter: Lemcke, Brommer & Partner

(56) Entgegenhaltungen:
- WO-A1-2008/015320

## Beschreibung

Die Erfindung betrifft eine Presse zum Laminieren von im Wesentlichen plattenförmigen Werkstücken unter Druck- und Wärmeeinwirkung nach dem Oberbegriff des Anspruchs 1, sowie ein Verfahren zum Laminieren von solchen Werkstücken unter Druck- und Wärmeeinwirkung nach dem Oberbegriff des Anspruchs 10.

Eine solche Presse umfasst demnach eine untere Pressenhälfte und eine obere Pressenhälfte, welche mittels umlaufender, ein- oder mehrteiliger Dichtungen im geschlossenen Zustand eine Vakuumkammer bilden, die durch eine flexible Membran in eine Produkthälfte und eine Druckhälfte unterteilt ist. Die Produkthälfte der Vakuumkammer dient zur Aufnahme von mindestens einem Werkstück und ist evakuierbar, während die Druckhälfte druckbeaufschlagbar ausgebildet ist. Aufgrund eines durch Evakuieren der Produkthälfte und/oder durch ein Druckbeaufschlagen der Druckhälfte erzeugten Druckunterschieds in der Vakuumkammer wird das Werkstück durch die Membran direkt oder indirekt gegen eine Unterseite der Vakuumkammer gepresst, um den Laminiervorgang durchzuführen.

Ein Verfahren zum Laminieren von im Wesentlichen plattenförmigen Werkstücken unter Druck- und Wärmeeinwirkung der vorliegenden Art wird unter Verwendung einer solchen Presse durchgeführt. Hierbei wird mindestens ein Werkstück in eine von einer unteren Pressenhälfte und einer oberen Pressenhälfte gebildeten, durch eine flexible Membran in eine Produkthälfte und eine Druckhälfte geteilte Vakuumkammer eingebracht und dort in der Produkthälfte angeordnet. Danach wird die Produkthälfte evakuiert und/oder die Druckhälfte druckbeaufschlagt, so dass die Membran in Folge des hierdurch erzeugten Druckunterschieds in der Vakuumkammer das Werkstück direkt oder indirekt gegen eine Unterseite der Vakuumkammer presst, um den Laminiervorgang durchzuführen.

Eine Presse der vorliegenden Art wird bevorzugt zum Laminieren von Photovoltaik-Modulen verwendet. Hierzu wird vorzugsweise eine Mehretagen-Presse eingesetzt, die eine Anzahl von Heizplatten umfasst, zwischen denen jeweils eine Pressenetage gebildet ist. Oberhalb jeder Heizplatte, an der Unterseite der darüber angeordneten Heizplatte, ist jeweils ein Dichtrahmen angeordnet, welcher eine Vakuumkammer umschreibt, die bei geschlossener Pressenetage durch dichtes Auflegen des Dichtrahmens auf die darunter liegende Heizplatte evakuiert werden kann. Über den Dichtrahmen ist eine elastische oder flexible Membran gespannt, die die Vakuumkammer in eine Produkthälfte und eine Druckhälfte unterteilt, sowie als Andrückmittel dient, um den für die Laminierung des Photovoltaik-Moduls erforderlichen Druck gegen die untere Heizplatte aufzubringen. Hierfür wird das bei geschlossener Presse unter der Membran, zwischen dieser und der Heizplatte liegende Volumen, das die Produkthälfte der Vakuumkammer bildet, evakuiert, wodurch sich die Membran eng an das Werkstück anlegt. Bedarfsweise wird außerdem eine durch Abdichten des Dichtrahmens gegen die obere Heizplatte gebildete, nach unten von der Membran begrenzte Druckhälfte der Vakuumkammer mit Druckluft beaufschlagt, um den Anpressdruck zwischen der Membran und dem Werkstück noch zu erhöhen. Das Evakuieren der Produkthälfte ermöglicht hierbei ein blasenfreies Laminieren des Werkstücks, da etwa vorhandene Lufteinschlüsse und dergleichen noch vor Erreichen der Erweichungstemperatur des im Werkstück verwendeten Klebstoffs herausgezogen werden. Durch den Kontakt des Werkstücks mit der unteren Heizplatte erwärmt sich dieses allmählich bis über die Erweichungstemperatur und die Aushärtetemperatur des im Werkstück normalerweise in Kleberschichten enthaltenen Klebstoffs, so dass der Laminierprozess bis zur vollständigen Aushärtung des Klebstoffs fortgesetzt werden kann.

Zur Erzielung einer möglichst hohen Kosteneffizienz beim Laminieren von Werkstücken in einer Presse der vorliegenden Art ist man bestrebt, die Taktzeiten so kurz wie möglich zu halten. Allerdings sind einer Verringerung der Taktzeiten dadurch Grenzen gesetzt, dass die Zeitdauer des Laminiervorgangs nicht beliebig verkürzt werden kann. Es kommt zur Erzielung einer hohen Kosteneffizienz also auch darauf an, sonstige Zeiten außerhalb des eigentlichen Laminiervorgangs, wie beispielsweise Aufheiz- und Abkühlvorgänge, insbesondere jedoch auch Produktionsstillstände, zu verkürzen.

Als ein nicht zu unterschätzender Zeitfaktor hat sich hierbei das Auswechseln einer defekt gewordenen Membran herausgestellt. Die flexible Membran einer Presse der vorliegenden Art muss hohen mechanischen Belastungen Stand halten und ist entsprechendem Verschleiß unterworfen. Nach typischerweise 2.000 bis 3.000 Laminierzyklen sind die Membrane verschlissen und müssen getauscht werden.

Um eine Membran einer Laminierpresse der vorliegenden Art zu wechseln, muss die Presse außer Betrieb gesetzt und abgekühlt werden, damit die Membran für das Bedienpersonal zugänglich wird. Nach dem Abmontieren der defekten bzw. verschlissenen Membran muss eine neue Membran eingebaut und gespannt werden. Um die Produktion danach wieder aufnehmen zu können, muss die Presse bzw. deren Heizplatte wieder auf Betriebstemperatur aufgeheizt werden. Ein Membranwechsel führt somit zu einem Produktionsstillstand von typischerweise zwei bis drei Stunden.

Bei mehretagigen Pressen, die eine Anzahl von übereinander angeordneten Vakuumkammern mit unteren und oberen Pressenhälften aufweisen (wobei in der Regel die obere Pressenhälfte einer ersten Vakuumkammer durch die Heizplatte gebildet wird, die gleichzeitig die untere Pressenhälfte der nächst darüber liegenden Vakuumkammer bildet) verschärft sich dieses Problem um ein Mehrfaches. Denn zum einen sind die Membrane in den einzelnen Vakuumkammern gegenüber einer Presse mit nur einer Vakuumkammer deutlich schlechter zugänglich und zum anderen dauern die Abkühl- und Aufheizprozesse deutlich länger. Darüber hinaus muss bei jedem Defekt einer einzelnen Membran in irgendeiner der mehreren übereinander angeordneten Vakuumkammern die komplette Mehretagen-Presse stillgesetzt werden.

Doch auch dann, wenn außer verschleißbedingten Defekten kein Membrandefekt auftritt, müssen entweder sämtliche Membrane vorsorglich getauscht werden, sobald ein erster verschleißbedingter Membrandefekt auftritt, was entsprechende Mehrkosten verursacht, oder aber die Produktionsstillstände durch verschleißbedingt auftretende Membrandefekte, die jeweils die gesamte Mehretagen-Presse treffen, vervielfachen sich verglichen mit einer einetagigen Presse.

Zur Vereinfachung eines Membrantauschs ist in der EP 1 609 597 A2 vorgeschlagen worden, die Membran an einem separat handhabbaren Membranrahmen zu befestigen, der seinerseits an der oberen Pressenhälfte lösbar angebracht ist. Die Membran kann also außerhalb der Presse an dem separat handhabbaren Membranrahmen befestigt werden. Danach kann der Membranrahmen werkzeuglos in eine Schiebeführung an der Unterseite der oberen Pressenhälfte in die Presse eingeschoben werden. Dies beschleunigt den Austausch einer beschädigten oder verschlissenen Membran naturgemäß erheblich. Allerdings erfordert ein Membranaustausch nach diesem Stand der Technik erfahrenes Personal, das die Membranrahmen von Hand aus der Presse entnimmt und in diese einsetzt. Ferner besteht hier eine erhebliche Verletzungsgefahr für das Personal, falls die Laminierpresse nicht zuvor abgekühlt wird. Schließlich ist es je nach Fläche der eingesetzten Membrane, die durchaus mehrere Quadratmeter betragen kann, mitunter kaum möglich, den entsprechend großflächigen Membranrahmen in die Schiebeführung einzuschieben oder aus dieser zu entnehmen; jedenfalls sind hierzu mehrere Personen nötig.

Ausgehend von diesem Stand der Technik liegt der vorliegenden Erfindung die Aufgabe zugrunde, eine Presse der Eingangs genannten Art hinsichtlich der durch den Membranverschleiß notwendigen Produktionsstillstände weiter zu verbessern.

Gelöst ist diese Aufgabe durch eine Presse mit den Merkmalen des Anspruchs 1 sowie durch ein Verfahren mit den Merkmalen des Anspruchs 10. Bevorzugte Ausgestaltungen der erfindungsgemäßen Presse finden sich in den Ansprüchen 2 bis 9; zweckmäßige Weiterbildungen des erfindungsgemäßen Verfahrens sind in den Ansprüchen 11 bis 14 niedergelegt.

Gemäß der vorliegenden Erfindung soll also mindestens ein Membranrahmen mit daran befestigter Membran als Wechselrahmen außerhalb der Presse vorgehalten werden, wofür in der erfindungsgemäßen Presse ein Membranrahmen-Magazin dient. Die benötigte Zeit für den Wechsel einer defekt gewordenen Membran beschränkt sich hierdurch also auf das Entnehmen des Membranrahmens mitsamt der Membran aus der Vakuumkammer und das Einsetzen des fertig vorbereiteten, als Wechselrahmen vorgehaltenen Membranrahmens mit auf- oder eingespannter Membran.

Mit dem erfindungsgemäßen Konzept kann der Wechselrahmen bei laufender Produktion mit einer neuen Membran versehen werden, welche wiederum vorzugsweise ohne Zeitdruck sorgfältig auf den Membranrahmen aufgespannt oder in diesen eingespannt werden kann. Soweit eine mehretagige Presse verwendet wird, kann es schon ausreichen, lediglich ein oder zwei überzählige Membranrahmen als Wechselrahmen vorzuhalten.

Hierbei ist es besonders vorteilhaft, wenn der Membranrahmen mittels Schnellverschlüssen an der oberen Pressenhälfte angebracht werden kann. Solche Schnellverschlüsse können vorzugsweise vom Bedienpersonal auch dann bedient werden, wenn sich die Presse auf Betriebstemperatur befindet, so dass der Abkühl- und Aufheizzyklus für das Austauschen einer defekten Membran entfallen kann.

Besondere Vorteile ergeben sich, wenn der Membranrahmen in eine obere Membranrahmenhälfte und eine untere Membranrahmenhälfte geteilt ist, zwischen denen die Membran eingespannt wird. Hierdurch vereinfacht sich die Handhabung des Membranrahmens mit eingespannter Membran, da die Membran durch ihre "innenliegende" Anordnung besser geschützt ist.

Insbesondere bei einer solchen zweiteiligen Ausbildung des Membranrahmens kann dieser oberseitig und unterseitig mit Dichtungen versehen sein und den Dichtrahmen zur Ausbildung der Vakuumkammer zwischen zwei ansonsten eben ausgebildeten Pressenhälften - die einzelne Heizplatten einer Mehretagenpresse sein können - bilden. Bevorzugt ist es allerdings, wenn der Membranrahmen etwas kleiner als die Vakuumkammer ausgebildet ist und innerhalb der Vakuumkammer an der oberen Pressenhälfte befestigt werden kann. Wenn der Membranrahmen insofern nicht Teil der Dichtung der Vakuumkammer ist, ergibt sich wiederum eine höhere Robustheit bei der außerhalb der Presse erfolgenden Handhabung desselben.

Für eine maschinelle Einbringung des erfindungsgemäßen Membranrahmens in die Vakuumkammer und aus dieser heraus ist es sehr vorteilhaft, wenn Transportrahmen für den Membranrahmen vorgesehen sind, auf denen die Membranrahmen dann mittels Beschickungs- und/oder Entladevorrichtungen zum Ein- oder Ausfördern der Werkstücke in die und aus der Vakuumkammer ein- und ausgefördert werden können. Eine solche maschinelle Einbringung des Membranrahmens dient der Möglichkeit, den Membranwechsel durchzuführen, obwohl die Presse auf Betriebstemperatur gehalten wird, und verkürzt die Wechselzeiten zusätzlich erheblich.

Das Membranrahmen-Magazin zur Vorhaltung von vorbereiteten Membranrahmen kann den Beschickungs- und/oder Entladevorrichtungen zugeordnet sein, wobei vorzugsweise eine Membranrahmen-Wechselstation vorhanden ist, von der aus die Beschickungs- und/oder Entladevorrichtungen bzw. das Membranrahmen-Magazin bei Bedarf mit Membranrahmen beladen werden können. Letzteres ist besonders vorteilhaft, wenn die Presse mehretagig ausgebildet ist und ein Beschickkorb mit mehreren Etagen verwendet wird. Dieser Beschickkorb kann dann vorzugsweise eine eigene Membranrahmenetage aufweisen, in der ständig ein vorbereiteter Membranrahmen mit eingespannter Membran vorgehalten wird.

Insbesondere bei der Laminierung von Photovoltaik-Modulen ist es vorteilhaft, wenn die erfindungsgemäße Presse eine mehretagige Presse ist, in der mehrere Pressenetagen mit je einer unteren Pressenhälfte und einer oberen Pressenhälfte pro Pressenetage, die zusammen eine Vakuumkammer bilden, übereinander angeordnet sind, wobei jede Pressenetage einen lösbar an der jeweiligen oberen Pressenhälfte befestigten, separat handhabbaren Membranrahmen mit eingespannter Membran aufweist. Denn die Ausbeute an elektrischer Energie von Photovoltaik-Modulen ist direkt proportional zur Fläche der Module. Das Übereinander-Anordnen von mehreren Pressenetagen erhöht die laminierte Modulfläche, ohne den Flächenbedarf am Produktionsstandort zu erhöhen.

Unabhängig davon, ob eine Presse mit nur einer Etage oder eine mehretagige Presse verwendet wird, wird für das erfindungsgemäße Verfahren ein Membranrahmen-Magazin mit vorzugsweise mindestens zwei Etagen verwendet, mittels dessen die Membranrahmen in die Vakuumkammer eingebracht und aus dieser wieder entnommen werden. In einer ersten Etage dieses Membranrahmen-Magazins wird ein mit einer intakten Membran versehener Membranrahmen als Wechselrahmen vorgehalten. Bei einem Membrandefekt wird der Membranrahmen mit der defekten Membran aus der Vakuumkammer in eine zweite Etage des Membranrahmen-Magazins ausgefördert und danach der als Wechselrahmen vorgehaltene Membranrahmen aus der ersten Etage in die Vakuumkammer eingefördert. Insbesondere wenn der Membranrahmen mittels Schnellverschlüssen an die obere Pressenhälfte anzubringen ist, ergibt sich durch diese Vorgehensweise ein nochmals beschleunigter Wechsel einer defekten Membran mit entsprechend kurzen Produktionsstillständen, was noch optimiert werden kann, wenn der Membranrahmen in einem Transportrahmen in die Vakuumkammer eingefördert wird, welcher Transportrahmen besonders bevorzugt mit Hubelementen, insbesondere von außen handbetätigbaren Hubelementen zum Anheben des Membranrahmens an die obere Pressenhälfte versehen ist.

Ausführungsbeispiele für erfindungsgemäß ausgestaltete Pressen werden im Folgenden anhand der beigefügten Zeichnungen näher beschrieben und erläutert. Es zeigen:
- Figur 1: eine schematische seitliche Teildarstellung einer erfindungsgemäß ausgestalteten Presse;
- Figur 2: eine schematische seitliche Teildarstellung eines Beschickkorbs zur Vorschaltung vor die in Figur 1 gezeigte Presse;
- Figur 2a: ein Teil aus Figur 2, jedoch eines anderen Ausführungsbeispiels;
- Figuren 3a und 3b: eine seitliche Darstellung und eine Draufsicht auf ein Membranrahmen-Magazin, das gleichzeitig eine Membranrahmen-Wechselstation ist;
- Figuren 4a und 4b: eine seitliche Ansicht und eine Draufsicht auf ein anderes Membranrahmen-Magazin bzw. eine andere Membranrahmen-Wechselstation;
- Figuren 5a und 5b: eine seitliche Ansicht und eine Draufsicht auf ein weiteres Membranrahmen-Magazin.

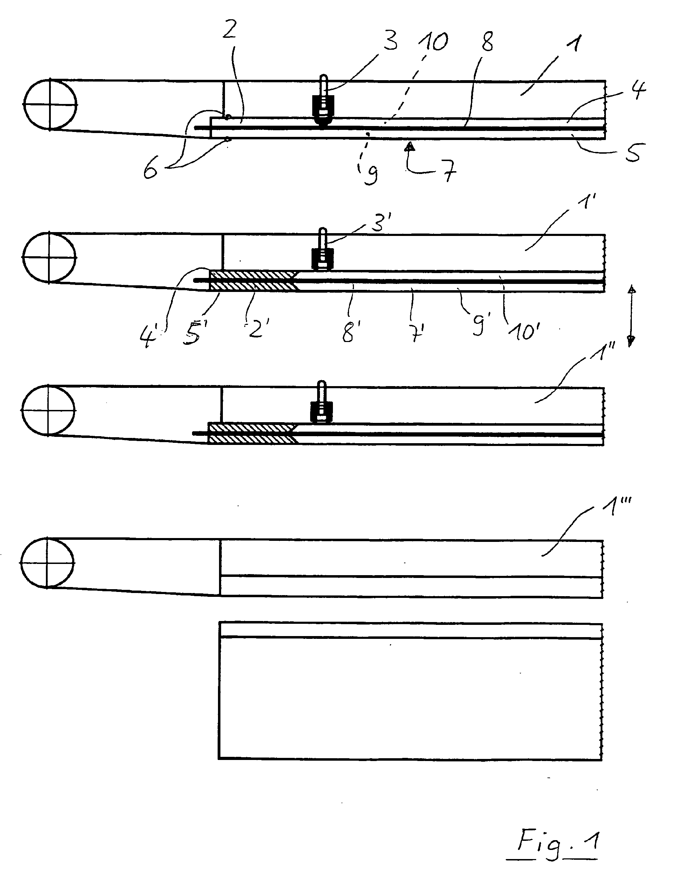

In Figur 1 ist in einer schematischen Teildarstellung eine erfindungsgemäß ausgestaltete Presse dargestellt, wobei hier vier Heizplatten 1, 1', 1", 1"' drei übereinander angeordnete Pressenetagen bilden, wobei die Heizplatte 1 die obere Pressenhälfte der obersten Pressenetage bildet und die Heizplatte 1' die untere Pressenhälfte der obersten Pressenetage sowie gleichzeitig die obere Pressenhälfte der mittleren Pressenetage ist. An den oberen Pressenhälften, am Beispiel der obersten Pressenetage also an der obersten Heizplatte 1, ist jeweils ein separat handhabbarer Membranrahmen 2 mittels Schnellverschlüssen 3 angebracht. Die Schnellverschlüsse 3 sind seitlich von außen zugänglich, so dass sie gelöst werden können, ohne die Heizplatte 1 abkühlen zu müssen. Sie bestehen aus einem an der Heizplatte 1 schwenkbar angebrachten Schnellspannhebel, der in hinterschnittene Ausnehmungen 19 im Membranrahmen 2 eingreifen kann. Selbstverständlich sind jedoch alle anderen bekannten Arten von Schnellspannmitteln und schnell zu lösender Verbindungen möglich.

Der Membranrahmen 2 besteht aus einer oberen Membranrahmenhälfte 4 und einer unteren Membranrahmenhälfte 5 und ist mittels umlaufender Dichtungen 6 im geschlossenen Zustand der Presse so gegen die Heizplatten 1 und 1' abgedichtet, dass er in seinem Inneren eine Vakuumkammer 7 bildet. Diese ist durch eine flexible Membran 8 in eine Produkthälfte 9 und eine Druckhälfte 10 geteilt, wobei die Membran 8 zwischen den oberen und unteren Membranrahmenhälften 4, 5 eingespannt ist. Das Einspannen der Membran 8 in den Membranrahmen 2 erfolgt außerhalb der Presse; die Membran 8 kann mitsamt dem Membranrahmen 2 bei Bedarf aus der Presse entnommen bzw. in diese eingesetzt werden. Am Beispiel der mittleren Pressenetage, die durch die zweitoberste Heizplatte 1' und die drittoberste Heizplatte 1'' gebildet wird, ist in einer teilgeschnittenen Darstellung verdeutlicht, wie das Innere des Membranrahmens 2' aussieht, und wie die Membran 8' die durch den Membranrahmen 2' gebildete Vakuumkammer 7' in eine Produkthälfte 9' und eine Druckhälfte 10' teilt.

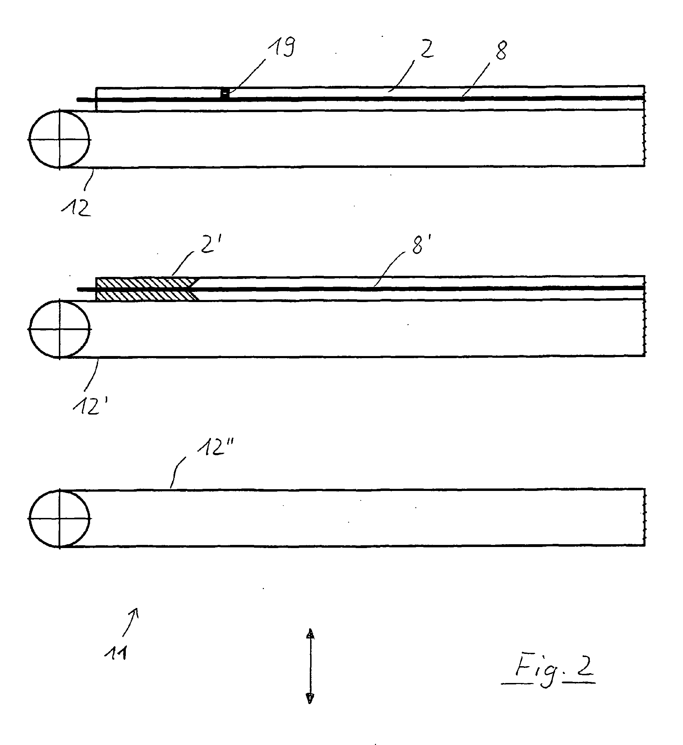

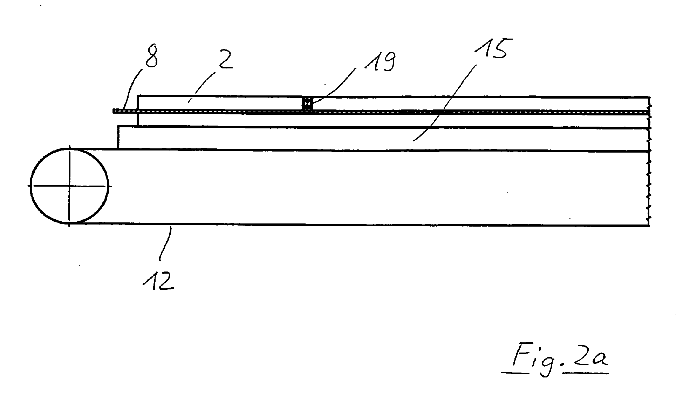

Figur 2 zeigt in einer seitlichen schematischen Darstellung einen Beschickkorb 11 für eine mehretagige Presse, wie sie in Figur 1 dargestellt ist. Dieser Beschickkorb 11 besteht aus mehreren Etagen mit Transportbändern 12, 12', 12" zum Einfördern und Ausfördern der plattenförmigen Werkstücke in die einzelnen Pressenetagen. Das oberste Transportband 12 bildet eine zusätzliche Membranrahmen-Etage, in der ein vorbereiteter Membranrahmen 2 mit eingespannter Membran 8 vorgehalten wird, so dass er bei Bedarf in diejenige Etage der Presse eingefördert werden kann, aus der auslassseitig ein Membranrahmen mit etwa defekter Membran ausgefördert worden ist. Dies kann, wie bereits erwähnt, bei Betriebstemperatur der Presse erfolgen, da die Schnellverschlüsse 3, 19 von der Seite der Presse her von außen zugänglich sind und das Ein- und Ausfördern der Membranrahmen 2 maschinell erfolgt.

Lediglich zur besseren Verdeutlichung ist auf dem mittleren Transportband 12' des in Figur 2 dargestellten Beschickkorbs 11 ein weiterer Membranrahmen 2' in wiederum teilgeschnittener Darstellung gezeigt. Im vorliegenden Ausführungsbeispiel soll diese Etage des Beschickkorbs 11 normalerweise keine Membran 8' in einem Membranrahmen 2' vorhalten; in anderen Ausführungsbeispielen ist dies jedoch durchaus möglich, oder diese Etage des Beschickkorbs 11 ist zum Ausfördern eines Membranrahmens 2' mit einer defekten Membran 8' vorgesehen.

Figur 2a zeigt das oberste Transportband 12 des in Figur 2 dargestellten Beschickkorbs 11, wobei hier allerdings der Membranrahmen 2 mit Membran 8 und Ausnehmung 19 für die Schnellverschlüsse 3 auf einem Transportrahmen 15 vorgehalten wird. Der Transportrahmen 15 hat dieselben Abmessungen wie die (nicht dargestellten) Transportrahmen für die zu laminierenden Werkstücke, so dass der Membranrahmen 2 auf dem Transportrahmen 15 in sämtlichen Fördermitteln der Gesamtvorrichtung in der gleichen Art und Weise transportiert werden kann, wie die zu laminierenden Werkstücke selbst.

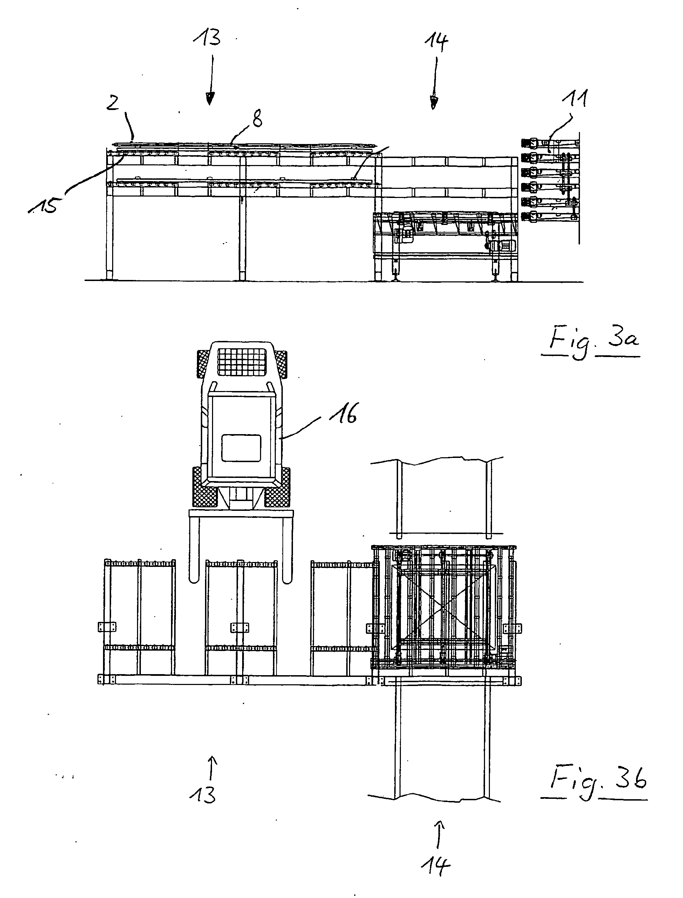

Figur 3a zeigt eine seitliche Darstellung eines als Membranrahmen-Wechselstation 13 ausgestalteten Membranrahmen-Magazins, während Figur 3b eine Draufsicht auf dieselbe zeigt. Die Membranrahmen-Wechselstation 13 ist dem Beschickkorb 11 vorgelagert, wobei zwischen der Membranrahmen-Wechselstation 13 und dem Beschickkorb 11 eine Querfördereinrichtung 14 zum Einfördern der zu laminierenden Werkstücke zwischengeschaltet ist. In der Membranrahmen-Wechselstation 13 wird ein Membranrahmen 2 mit eingespannter Membran 8 vorgehalten, und zwar auf einem Transportrahmen 15, der entsprechend den zu laminierenden Werkstücken bzw. deren Transportrahmen ausgebildet ist und so gewährleistet, dass der Membranrahmen 2 problemlos mit den vorhandenen Fördermitteln und dem Beschickkorb 11 in die Presse und aus dieser heraus transportiert werden kann. Ein Gabelstapler 16 kann den Membranrahmen 12 aus der Membranrahmen-Wechselstation 13 herausheben, um ihn an einer separaten (nicht dargestellten) Station mit einer neuen Membran 8 bespannen zu können.

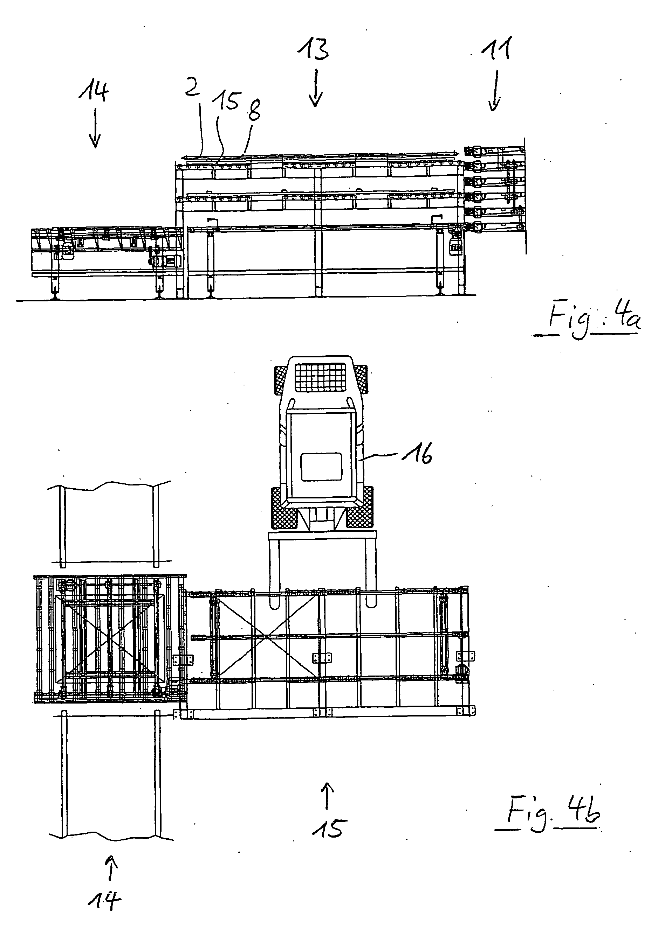

Die Figuren 4a und 4b zeigen in entsprechender Darstellung eine Modifikation der Membranrahmen-Wechselstation 13 aus den Figuren 3a und 3b. Diese Modifikation besteht darin, dass die Membranrahmen-Wechselstation 13 im Wesentlichen als Förderstrecke zwischen der Querfördereinrichtung 14 (die dann auch eine Längsfördereinrichtung sein kann) und dem Beschickkorb 11 ausgestaltet ist, wobei der Gabelstapler 16 etwaige ausgeförderte Membranrahmen 2 (mit Transportrahmen 15) aus der Membran-Wechselstation 13 entnehmen kann und einen neuen Membranrahmen 2 (mit Transportrahmen 15) dort wieder ablegen kann, um ihn via Beschickkorb 11 in die entsprechende Pressenetage einzufördern.

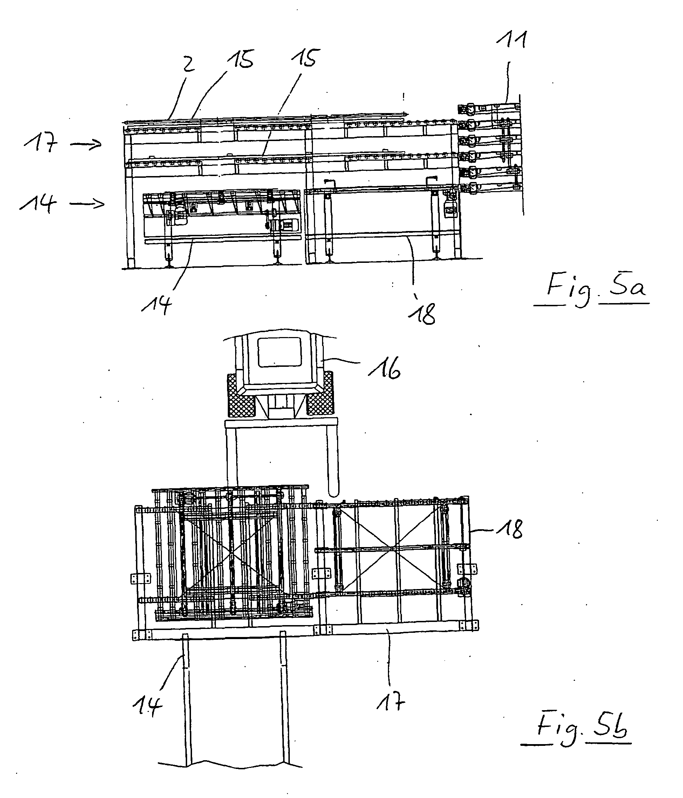

Die Figuren 5a und 5b zeigen, wiederum in einer seitlichen Ansicht und einer Draufsicht, eine weitere Modifikation eines Membranrahmen-Magazins 17. Dieses Membranrahmen-Magazin ist wiederum dem Beschickkorb 11 vorgeschaltet, jedoch ist die Querfördereinrichtung 14 zum Anfördern der zu laminierenden Werkstücke dem Membranrahmen-Magazin 17 weder vorgeschaltet noch nachgeschaltet, sondern nebengeordnet. Dies wird dadurch erreicht, dass das Membranrahmen-Magazin 17 oberhalb der Querfördereinrichtung 14 und einer kurzen Längsförderstrecke 18 angeordnet und dem Beschickkorb 11 dementsprechend direkt zugeordnet ist. Hierdurch ist die Höhenverfahrbarkeit des Beschickkorbs 11 optimal genutzt. Im Membranrahmen-Magazin 17 wird eine Anzahl von fertig vorbereiteten Membranrahmen 2 auf Transportrahmen 15 magaziniert vorgehalten, um eine mehretagige Presse kurzfristig mit mehreren neuen Membranen zu versehen.

## Patentansprüche

1. Presse zum Laminieren von im Wesentlichen plattenförmigen Werkstücken unter Druck- und Wärmeeinwirkung, mit einer unteren Pressenhälfte (1') und einer oberen Pressenhälfte (1), welche mittels umlaufender, ein- oder mehrteiliger Dichtungen (6) in geschlossenem Zustand eine Vakuumkammer (7) bilden, mit einer flexiblen Membran (8), die die Vakuumkammer (7) in eine zur Aufnahme von mindestens einem Werkstück vorgesehene, evakuierbare Produkthälfte (9) und eine druckbeaufschlagbare Druckhälfte (10) unterteilt, wobei die Membran (8) so ausgestaltet und angeordnet ist, dass sie aufgrund eines durch Evakuieren der Produkthälfte (9) und/oder durch ein Druckbeaufschlagen der Druckhälfte (10) erzeugten Druckunterschieds in der Vakuumkammer (7) das Werkstück direkt oder indirekt gegen eine Unterseite der Vakuumkammer (7) presst, und wobei die Membran (8) an einem lösbar an der oberen Pressenhälfte (1) angebrachten, separat handhabbaren Membranrahmen (2) befestigt ist,
**dadurch gekennzeichnet,**
**dass** die Presse ein Membranrahmen-Magazin (17) zur Vorhaltung von mindestens einem funktionsfertig vorbereiteten Membranrahmen (2) mit daran befestigter Membran (8) als Wechselrahmen umfasst.

2. Presse nach Anspruch 1,
**dadurch gekennzeichnet,**
**dass** die Presse Beschickungs- und/oder Entladevorrichtungen zum Ein- und Ausfördern der Werkstücke in die und aus der Vakuumkammer (7) umfasst, wobei die Beschickungs- und/oder Entladevorrichtungen außerdem zum Ein- und Ausfördern der Membranrahmen (2) in die und aus der Vakuumkammer (7) vorgesehen sind.

3. Presse nach Anspruch 2,
**dadurch gekennzeichnet,**
**dass** Transportrahmen (15) für die Membranrahmen (2) vorgesehen sind, auf denen die Membranrahmen (2) mittels der Beschickungs- und/oder Entladevorrichtungen in die und aus der Vakuumkammer (7) ein- und ausgefördert werden können.

4. Presse nach Anspruch 3,
**dadurch gekennzeichnet,**
**dass** die Transportrahmen (15) mit Hubelementen, insbesondere handbetätigbaren Hubelementen zum Anheben der Membranrahmen (2) versehen sind.

5. Presse nach mindestens einem der Ansprüche 2 bis 4,
**dadurch gekennzeichnet,**
**dass** den Beschickungs- und/oder Entladevorrichtungen eine Membranrahmen-Wechselstation (13) zugeordnet ist.

6. Presse nach mindestens einem der Ansprüche 1 bis 5,
**dadurch gekennzeichnet,**
**dass** der Membranrahmen (2) mittels Schnellverschlüssen (3) an der oberen Pressenhälfte (1) anbringbar ist.

7. Presse nach mindestens einem der Ansprüche 1 bis 6,
**dadurch gekennzeichnet,**
**dass** der Membranrahmen (2) innerhalb der Vakuumkammer (7) an der oberen Pressenhälfte (1) befestigt ist.

8. Presse nach mindestens einem der Ansprüche 1 bis 7,
**dadurch gekennzeichnet,**
**dass** es sich um eine mehretagige Presse handelt, in der mehrere Pressenetagen mit je einer unteren Pressenhälfte (1') und einer oberen Pressenhälfte (1) pro Pressenetage, die zusammen je eine Vakuumkammer (7) bilden, übereinander angeordnet sind, wobei jede Pressenetage einen lösbar an der jeweiligen oberen Pressenhälfte (1) befestigten, separat handhabbaren Membranrahmen (2) mit daran befestigter Membran (8) aufweist.

9. Presse nach Anspruch 8,
**dadurch gekennzeichnet,**
**dass** zur Beschickung der Pressenetagen ein mehretagiger Beschickkorb (11) mit einer Membranrahmen-Etage (12) vorhanden ist.

10. Verfahren zum Laminieren von im Wesentlichen plattenförmigen Werkstücken unter Druck- und Wärmeeinwirkung, unter Verwendung einer Presse nach mindestens einem der Ansprüche 1 bis 9,
wobei mindestens ein Werkstück in eine von einer unteren Pressenhälfte und einer oberen Pressenhälfte gebildeten, durch eine flexible Membran in eine Produkthälfte und eine Druckhälfte geteilte Vakuumkammer eingebracht und in der Produkthälfte angeordnet wird, wonach das Werkstück durch die Membran aufgrund eines durch Evakuieren der Produkthälfte und/oder durch Druckbeaufschlagen der Druckhälfte erzeugten Druckunterschieds in der Vakuumkammer direkt oder indirekt gegen eine Unterseite der Vakuumkammer gepresst wird, um den Laminiervorgang durchzuführen,
und wobei die Membran außerhalb der Presse an einem separat handhabbaren Membranrahmen befestigt und dieser Membranrahmen lösbar an der oberen Pressenhälfte angebracht wird,
**dadurch gekennzeichnet,**
**dass** mindestens ein Membranrahmen mit daran befestigter Membran als Wechselrahmen außerhalb der Presse vorgehalten wird.

11. Verfahren nach Anspruch 10,
**dadurch gekennzeichnet,**
**dass** der Presse ein Membranrahmen-Magazin mit mindestens zwei Etagen beigeordnet wird, wobei in einer ersten Etage des Membranrahmen-Magazins ein Membranrahmen als Wechselrahmen vorgehalten wird, und bei einem Membrandefekt der in der Vakuumkammer befindliche Membranrahmen mit der defekten Membran in eine zweite Etage des Membranrahmen-Magazins entnommen wird, wonach der als Wechselrahmen vorgehaltene, vorbereitete Membranrahmen in die Vakuumkammer eingebracht wird.

12. Verfahren nach einem der Ansprüche 10 oder 11,
**dadurch gekennzeichnet,**
**dass** Beschickungs- und/oder Entladevorrichtungen zum Ein- und Ausfördern der Werkstücke in die und aus der Vakuumkammer der Presse außerdem zum Ein- und Ausfördern der Membranrahmen in die und aus der Vakuumkammer verwendet werden.

13. Verfahren nach Anspruch 12,
**dadurch gekennzeichnet,**
**dass** die Membranrahmen auf Transportrahmen in die Vakuumkammer eingebracht und aus dieser entnommen werden.

14. Verfahren nach Anspruch 13,
**dadurch gekennzeichnet,**
**dass** die Membranrahmen nach ihrem Einbringen in die Vakuumkammer mittels im Transportrahmen angeordneten Hubelementen, insbesondere handbetätigbaren Hubelementen, zur oberen Pressenhälfte hin angehoben werden, um sie dort befestigen zu können.

## Claims

1. Press for laminating substantially board-like workpieces under the action of pressure and heat, having a lower press half (1') and an upper press half (1) which by means of peripheral one-part or multipart seals (6) form, in the closed state, a vacuum chamber (7), having a flexible membrane (8) which divides the vacuum chamber (7) into a product half (9) for receiving at least one workpiece, which product half can be evacuated, and a pressure half (10) which can be pressurised, the membrane (8) being so configured and arranged that, as a result of a pressure difference in the vacuum chamber (7) generated by evacuation of the product half (9) and/or by pressurisation of the pressure half (10), it presses the workpiece directly or indirectly against a lower side of the vacuum chamber (7), and the membrane (8) being attached to a membrane frame (2) that is releasably mounted on the upper press half (1), which membrane frame can be separately manipulated,
**characterised in that**
the press comprises a membrane-frame magazine (17) for holding in reserve as a replacement frame at least one membrane frame (2) that has been prepared ready for use with a membrane (8) attached thereto.

2. Press according to claim 1,
**characterised in that**
the press comprises loading and/or unloading devices for conveying the workpieces into and out of the vacuum chamber (7), the loading and/or unloading devices being provided also for conveying the membrane frames (2) into and out of the vacuum chamber (7).

3. Press according to claim 2,
**characterised in that**
there are provided for the membrane frames (2) transport frames (15) on which the membrane frames (2) can be conveyed into and out of the vacuum chamber (7) by means of the loading and/or unloading devices.

4. Press according to claim 3,
**characterised in that**
the transport frames (15) are provided with lifting elements, especially manually operable lifting elements, for lifting the membrane frames (2).

5. Press according to at least one of claims 2 to 4,
**characterised in that**
the loading and/or unloading devices are assigned a membrane-frame changing station (13).

6. Press according to at least one of claims 1 to 5,
**characterised in that**
the membrane frame (2) is mountable on the upper press half (1) by means of quick-release closures (3).

7. Press according to at least one of claims 1 to 6,
**characterised in that**
the membrane frame (2) is attached to the upper press half (1) inside the vacuum chamber (7).

8. Press according to at least one of claims 1 to 7,
**characterised in that**
it is a multi-level press in which there are arranged, one above the other, a plurality of press levels having for each press level a lower press half (1') and an upper press half (1) which together form a vacuum chamber (7), each press level having releasably attached to its upper press half (1) a membrane frame (2) with a membrane (8) attached thereto, which membrane frame can be separately manipulated.

9. Press according to claim 8,
**characterised in that**
for loading the press levels there is provided a multi-level loading cage (11) having a membrane-frame level (12).

10. Method of laminating substantially board-like workpieces under the action of pressure and heat, using a press in accordance with at least one of claims 1 to 9,
wherein at least one workpiece is introduced into a vacuum chamber which is formed by a lower press half and an upper press half and is divided into a product half and a pressure half by a flexible membrane, the workpiece being arranged in the product half, whereupon in order to perform the laminating operation the workpiece is pressed directly or indirectly against a lower side of the vacuum chamber as a result of a pressure difference in the vacuum chamber generated by evacuation of the product half and/or by pressurisation of the pressure half,
and wherein the membrane is attached, outside the press, to a membrane frame which can be separately manipulated, and that membrane frame is releasably mounted on the upper press half, **characterised in that**
at least one membrane frame with a membrane attached thereto is held in reserve outside the press as a replacement frame.

11. Method according to claim 10,
**characterised in that**
the press is assigned a membrane-frame magazine having at least two levels, a membrane frame being held in reserve as a replacement frame in a first level of the membrane-frame magazine, and in the event of a defect in a membrane the membrane frame having the defective membrane located in the vacuum chamber is removed into a second level of the membrane-frame magazine, whereupon the prepared membrane frame held in reserve as a replacement frame is introduced into the vacuum chamber.

12. Method according to either one of claims 10 and 11, **characterised in that**
loading and/or unloading devices for conveying the workpieces into and out of the vacuum chamber of the press are used also for conveying the membrane frames into and out of the vacuum chamber.

13. Method according to claim 12,
**characterised in that**
the membrane frames are introduced into the vacuum chamber and removed therefrom on transport frames.

14. Method according to claim 13,
**characterised in that**
the membrane frames, after being introduced into the vacuum chamber, are lifted by means of lifting elements, especially manually operable lifting elements, which are arranged in the transport frame, towards the upper press half in order that they can be fastened thereto.

## Revendications

1. Presse dévolue à la stratification de pièces substantiellement en forme de plaques, sous l'effet de la pression et de la chaleur, comprenant une moitié inférieure (1') et une moitié supérieure (1) qui forment une chambre à vide (7), à l'état fermé, au moyen de garnitures périphériques d'étanchement (6) en une ou plusieurs partie(s) ; et une membrane flexible (8) scindant ladite chambre à vide (7) en une moitié (9) logeant les produits, pouvant être soumise à une dépression et prévue pour recevoir au moins une pièce, et en une moitié pressurisable (10) pouvant être sollicitée à la pression, ladite membrane (8) étant configurée et agencée de façon telle que, sous l'action d'une différence de pression engendrée dans la chambre à vide (7) par création d'un vide dans ladite moitié (9) logeant les produits, et/ou par une sollicitation à la pression de ladite moitié pressurisable (10), elle plaque la pièce directement ou indirectement contre une face inférieure de ladite chambre à vide (7), et ladite membrane (8) étant fixée à un châssis (2) porte-membrane pouvant être manipulé distinctement et implanté, de manière libérable, sur la moitié supérieure (1) de ladite presse,
**caractérisée par le fait**
**que** la presse inclut un magasin (17) à châssis porte-membranes conçu pour tenir en attente, en tant que châssis interchangeable, au moins un châssis (2) porte-membrane fonctionnellement apprêté et auquel une membrane (8) est fixée.

2. Presse selon la revendication 1,
**caractérisée par le fait**
**que** ladite presse inclut des dispositifs d'alimentation et/ou de déchargement conçus pour introduire les pièces dans la chambre à vide (7), et pour les extraire de cette dernière, lesdits dispositifs d'alimentation et/ou de déchargement étant prévus, par ailleurs, pour introduire les châssis (2) porte-membranes dans la chambre à vide (7), et pour les extraire de celle-ci.

3. Presse selon la revendication 2,
**caractérisée par le fait**
**qu'**il est prévu des châssis de transport (15) dédiés aux châssis (2) porte-membranes et sur lesquels lesdits châssis (2) porte-membranes peuvent être introduits dans la chambre à vide (7), et extraits de cette dernière, au moyen des dispositifs d'alimentation et/ou de déchargement.

4. Presse selon la revendication 3,
**caractérisée par le fait**
**que** les châssis de transport (15) sont pourvus d'éléments de levage, en particulier d'éléments de levage actionnables à la main, en vue de soulever les châssis (2) porte-membranes.

5. Presse selon au moins l'une des revendications 2 à 4,
**caractérisée par le fait**
**qu'**un poste (13) de remplacement des châssis porte-membranes est associé aux dispositifs d'alimentation et/ou de déchargement.

6. Presse selon au moins l'une des revendications 1 à 5,
**caractérisée par le fait**
**que** le châssis (2) porte-membrane peut être implanté sur la moitié supérieure (1) de ladite presse au moyen de fermetures rapides (3).

7. Presse selon au moins l'une des revendications 1 à 6,
**caractérisée par le fait**
**que** le châssis (2) porte-membrane est fixé à la moitié supérieure (1) de ladite presse à l'intérieur de la chambre à vide (7).

8. Presse selon au moins l'une des revendications 1 à 7,
**caractérisée par le fait**
**qu'**elle se présente comme une presse à étages multiples dans laquelle sont superposés plusieurs étages de pressage comprenant respectivement, pour chaque étage de pressage, une moitié inférieure (1') de la presse et une moitié supérieure (1) de ladite presse, et formant associativement une chambre à vide (7) respective, chaque étage de pressage étant doté d'un châssis (2) porte-membrane qui est fixé amoviblement à la moitié supérieure (1) considérée, peut être manipulé distinctement, et auquel une membrane (8) et fixée.

9. Presse selon la revendication 8,
**caractérisée par le fait**
**qu'**une cage d'alimentation (11) à étages multiples, munie d'un étage (12) à châssis porte-membranes, est présente en vue d'alimenter les étages de ladite presse.

10. Procédé de stratification de pièces substantiellement en forme de plaques, sous l'effet de la pression et de la chaleur, en utilisant une presse conforme à au moins l'une des revendications 1 à 9,
sachant qu'au moins une pièce est introduite dans une chambre à vide formée par une moitié inférieure de la presse et par une moitié supérieure de ladite presse et scindée, par une membrane flexible, en une moitié logeant les produits et en une moitié pressurisable, et est disposée dans ladite moitié logeant les produits, ladite pièce étant ensuite plaquée directement ou indirectement contre une face inférieure de ladite chambre à vide, par ladite membrane, sous l'action d'une différence de pression engendrée dans ladite chambre à vide par création d'un vide dans ladite moitié logeant les produits, et/ou par sollicitation à la pression de ladite moitié pressurisable, en vue de l'exécution du processus de stratification,
et sachant que ladite membrane est fixée, à l'extérieur de la presse, à un châssis porte-membrane pouvant être manipulé distinctement, ce châssis porte-membrane étant implanté de manière libérable sur la moitié supérieure de ladite presse,
**caractérisé par le fait**
**qu'**au moins un châssis porte-membrane, auquel une membrane est fixée, est tenu en attente à l'extérieur de ladite presse en tant que châssis interchangeable.

11. Procédé selon la revendication 10,
**caractérisé par le fait**
**qu'**un magasin à châssis porte-membranes, comptant au moins deux étages, est adjoint à ladite presse, sachant qu'un châssis porte-membrane est tenu en attente dans un premier étage dudit magasin à châssis porte-membranes, en tant que châssis interchangeable, et sachant qu'en cas de défaillance d'une membrane, le châssis porte-membrane situé dans la chambre à vide est évacué vers un second étage dudit magasin à châssis porte-membranes, avec la membrane défectueuse, puis le châssis porte-membrane apprêté, tenu en attente en tant que châssis interchangeable, est introduit dans ladite chambre à vide.

12. Procédé selon l'une des revendications 10 ou 11,
**caractérisé par le fait**
**que** des dispositifs d'alimentation et/ou de déchargement conçus pour introduire les pièces dans la chambre à vide de la presse, et pour les extraire de ladite chambre, sont par ailleurs utilisés pour introduire les châssis porte-membranes dans ladite chambre à vide, et pour les extraire de celle-ci.

13. Procédé selon la revendication 12,
**caractérisé par le fait**
**que** les châssis porte-membranes sont introduits dans la chambre à vide, et extraits de cette dernière, sur des châssis de transport.

14. Procédé selon la revendication 13,
**caractérisé par le fait**
**qu'**à l'issue de leur introduction dans la chambre à vide, les châssis porte-membranes sont soulevés en direction de la moitié supérieure de la presse au moyen d'éléments de levage intégrés dans le châssis de transport, en particulier d'éléments de levage actionnables à la main, afin de pouvoir les fixer à ladite moitié.
